# DEMANDE DE BREVET EUROPEEN

(11) **EP 3 348 151 A1**
(43) Date de publication de la demande: **18.07.2018**
(21) Numéro de dépôt: 17189241.7
(22) Date de dépôt: 22.04.2013
(51) Int. Cl.: A23L 27/40, A23C 19/064, A23C 19/068, A21D 2/02

(54) **SUBSTITUT DE SEL**

(30) Priorité: 24.04.2012 FR 1253735
(62) Demande divisionnaire de: 13723847.3
(71) Demandeur: Compagnie Des Salins Du Midi Et Des Salines De L'Est, 92115 Clichy Cédex (FR)
(72) Inventeur: JOLY, Karen, 90000 BELFORT (FR); MANNINA, Delphine, 94130 NOGENT SUR MARNE (FR); MONTARON, Marie-Pierre, 21800 QUETIGNY (FR); YVON, Aude, 78500 SARTROUVILLE (FR)
(74) Mandataire: McDade, Sophie V.G.A.

(57) **Abrégé**

L'invention concerne un substitut de sel comprenant, en association avec du chlorure de sodium de :
- 72 % à 87 % en poids de chlorure de potassium,
- 10 % à 20 % en poids de sulfate de magnésium, et
- 3 % à 8 % en poids de sulfate de calcium.

Ces composés minéraux sont typiquement d'origine marine. L'invention concerne également les utilisations du substitut de sel selon l'invention en tant que sel de table, ou pour la préparation industrielle d'aliments pour l'homme et/ou l'animal, assurant les mêmes fonctions techniques que le sel. L'invention porte également sur un procédé de fabrication d'un produit salé ainsi que sur une denrée alimentaire comprenant le substitut de sel.

## Description

L'invention se rapporte d'une manière générale à un substitut de sel ayant une composition hors NaCl lui permettant de rester fidèle au goût du sel.

En particulier, l'invention concerne un substitut de sel utilisable dans l'industrie alimentaire ou directement en substitut de sel ordinaire par le consommateur.

De nombreuses études scientifiques ont démontré une corrélation entre une consommation excessive de sel (NaCl) et les maladies cardio-vasculaires qui sont, de nos jours, un véritable problème de santé publique.

Cette surconsommation de sel est principalement due à des changements de mode alimentaire tel que le détournement de la cuisine traditionnelle, au profit d'une cuisine plus rapide et plus industrialisée : fréquentation de fast-food, consommation de plats cuisinés, etc.

Afin de réduire les risques liés à la surconsommation de sel, il a été proposé de diminuer les apports journaliers en sel, en utilisant entre autre des compositions de substitut de sel. Parmi celles-ci, on trouve notamment des sels de substitution appauvris en chlorure de sodium, mais enrichis en sels de potassium et sels de magnésium en quantités substantielles.

A cet effet, on a proposé dans l'état de la technique :
a) le document GB 2237720 qui décrit un sel de substitution contenant, en poids de la composition finale, 46,6 % de NaCl, 6,5 % de MgCl₂, 2,8 % de MgSO₄, 2,2 % de CaSO₄, 41,5 % de KCl, 0,10 % de MgBr₂, et 0,2 % de CaCO₃, ou
b) la composition commerciale comprenant 33,3 % de NaCl + 66,6% de KCl.

Toutefois, la recherche d'un sel de substitution est difficile à mettre en oeuvre. Elle nécessite de trouver des composés qui compensent au mieux le déficit en goût provoqué par la faible proportion de chlorure de sodium, tout en maintenant les fonctions techniques du sel.

On observe que les compositions de substitut de sel de l'art antérieur présentent des qualités gustatives limitées et n'arrivent pas à égaler le pouvoir salant du vrai sel. Typiquement, ces compositions présentent des «faux goûts », tel que l'amertume, qui altèrent le goût du sel.

De ce fait, la recherche d'un sel de substitution d'un sel ordinaire comprenant du chlorure de sodium en moindre quantité et présentant des qualités gustatives et un pouvoir salant identique à celui du sel ordinaire, reste d'un grand intérêt.

On souhaite en effet obtenir un substitut de sel comprenant une composition se rapprochant le plus de la perception sensorielle du sel, sous forme de sel de table ou comme complément dans des matrices alimentaires, ayant un goût salé, un rôle d'exhausteur de goût, une absence de faux goût, et de préférence, les mêmes fonctions techniques que le sel.

A cet effet, l'invention a pour objet un substitut de sel comprenant entre 25 % et 96 % de chlorure de sodium en poids total du substitut de sel hors additifs, de 0 à 4 % d'additif(s) en poids total du substitut de sel, et une composition restante comprenant en poids total de cette composition restante :
- 72 % à 87 % de chlorure de potassium,
- 10 % à 20 % de sulfate de magnésium, et
- 3 % à 8%, de préférence à 7,5 %, de sulfate de calcium.

Avantageusement cette composition restante est constituée de chlorure de potassium, de sulfate de magnésium et de sulfate de calcium. Dans tout ce qui suit, les pourcentages sont exprimés en poids massique, sauf indication contraire, soit par rapport au substitut de sel global, soit par rapport à la composition hors sel si spécifié.

Des études ont été menées afin d'évaluer quels composés seraient les meilleurs candidats pour compenser la perte sensorielle produite par la diminution en chlorure sodium. Le périmètre de l'étude a été limité aux minéraux présents en quantité substantielle dans l'eau de mer à savoir NaCl, KCl, MgSO₄ CaSO₄, MgCl₂, CaCl₂, et K₂SO₄.

L'art antérieur relatif au goût des minéraux enseigne que dans un mélange de minéraux, les anions influencent le goût par leur taille, c'est-à-dire que plus un anion est petit, plus l'intensité du goût sera forte. C'est pour cette raison que les chlorures sont considérés comme d'excellents candidats car ils ont un poids moléculaire bien inférieur à celui des sulfates.

En conséquence, avant l'invention, l'art antérieur suggérait une formule optimale composée exclusivement de chlorures ne devant contenir, selon l'hypothèse ci-dessus, que du chlorure de potassium (KCl), du chlorure de magnésium (MgCl₂) et/ou du chlorure de calcium (CaCl₂). De telles formulations étaient d'ailleurs proposées dans le commerce avant l'invention. On peut citer par exemple :
- 33,3% de NaCl, 66% KCl,
- 60% de NaCl, 21,4% de KCl, 15,5% de MgCl₂, 3,1% de NH₄Cl, ou
- une composition constituée uniquement de NaCl et de CaCl₂.

Toutefois, les analyses sensorielles ont révélé de manière surprenante, que la meilleure solution de substitution du sel était un mélange contenant à la fois des chlorures et des sulfates comme le propose l'invention. Plus particulièrement, il s'est avéré qu'une formule contenant du chlorure de potassium, du sulfate de magnésium, ainsi que du sulfate de calcium, à des proportions particulières, était meilleure en goût que les formules composées exclusivement de chlorures.

Il semblerait que dans ce mélange, l'existence d'interactions de goût entre les sels minéraux permette d'éliminer des faux-goûts.

De surcroit, cette composition comprend des minéraux présents naturellement dans l'eau de mer tels que NaCl, KCl, MgSO₄ et CaSO₄.

Le substitut de sel peut aussi comprendre de petites quantités de composés à goût faible ou nul, tel que de l'argile issu du mode de récolte, etc.

Selon un mode préféré de réalisation de l'invention, le substitut de sel comprend moins de 90 % de NaCl, de préférence moins de 80 % de NaCl.

Typiquement, le chlorure de sodium provient de la mer, de gisements souterrains de sel gemme ou de saumure naturelle.

Selon les différentes normes sur le sel de qualité alimentaire, la teneur en chlorure de sodium (NaCl) ne doit pas être inférieure à 97 % de l'extrait sec, hors additifs.

Toutefois, pour le sel marin gris, une exception est faite au degré de pureté minimal toléré qui est de 94 %, les impuretés étant essentiellement de l'argile issue du mode de récolte, des sels de magnésium, de calcium et de potassium, sous forme de sulfate ou de chlorure.

Concernant les sels de mer blancs, les insolubles sont présents en quantité bien moindre, le taux de pureté en NaCl, hors additifs, pouvant avoisiner les 99,8 %.

Selon une composition préférée, le substitut de sel selon l'invention comprend préférentiellement entre 50 % et 95 % de chlorure de sodium.

Selon une caractéristique optionnelle de l'invention, la composition restante comprend en poids total de cette composition restante :
- 76 % à 84 % de chlorure de potassium,
- 12 % à 18 % de sulfate de magnésium, et
- 4 % à 6 % de sulfate de calcium.

Avantageusement, la composition restante comprend en poids total de cette composition restante :
- 78 % à 82 % de chlorure de potassium,
- 13,5 % à 16,5 % de sulfate de magnésium, et
- 4,5 % à 5,5 % de sulfate de calcium.

Selon un mode de réalisation préféré, la composition restante comprend en poids total de cette composition restante :
- 82 % à 86 % de chlorure de potassium,
- 10 % à 12,5 % de sulfate de magnésium, et
- 4,5 % à 5,5 % de sulfate de calcium.

Lorsque cette composition se présente sous forme de cristaux individuels (telle que des particules de sels), une telle composition permet d'obtenir un substitut de sel ayant une meilleure coulabilité et qui a moins tendance à s'agglomérer.

Selon une caractéristique optionnelle de l'invention, chaque additif appartient au groupe constitué par les composés de l'iode, les agents antiagglomérants, les agents de coulabilité, le fluorure de potassium et le nitrite de sodium, seul ou en mélanges.

Par le terme « additif », on entend les additifs techniques et les nutriments, typiquement l'iode.

L'iode est apporté sous forme d'iodure de potassium, d'iodure de sodium, d'iodate de sodium ou d'iodate de potassium. Les quantités diode diffèrent selon les pays et dépendent le plus souvent des réglementations nationales (de 15 à plus de 100 mg/kg). L'iode est diffusé par l'intermédiaire du sel afin de réduire les carences en iode dans la population et ainsi contribuer, entre autre, au bon fonctionnement de la thyroïde.

Le fluorure de potassium, est incorporé dans le sel afin de réduire les carences en fluor de la population. La quantité à incorporer est fixée par les différentes réglementations nationales, par exemple en France la quantité est fixée à 250 mg/kg. Le sel est fluoré car le fluorure contribue au maintien de la minéralisation des dents.

Par «agents antiagglomérants», on entend des substances utilisées pour empêcher l'agglomération des cristaux de sel, et ainsi empêcher la reprise en masse.

De préférence, les agents antiagglomérants sont choisis parmi le groupe constitué par le ferrocyanure de sodium (Na₄Fe(CN)₆), le ferrocyanure de potassium (K₄Fe(CN)₆), et le ferrocyanure de calcium (Ca₂Fe(CN)₆).

Par «agents de coulabilité», on entend des agents permettant d'améliorer la coulabilité des sels, que ce soit pour faciliter sa sortie des trous d'une salière ou pour faciliter son utilisation sur une machine industrielle.

De préférence, les agents de coulabilité sont choisis parmi le groupe constitué par les carbonates de calcium (CaCO₃ / Ca(HCO₃)₂), les carbonates de sodium (Na₂CO₃ /NaHCO₃), les carbonates de magnésium (MgCO₃ / 4MgCO₃Mg(OH)₂), l'oxyde de magnésium (MgO) et le dioxyde de silicium (SiO₂, nH2O). Un mélange de carbonate de magnésium et d'oxyde de magnésium est préféré, notamment dans des proportions respectives en poids de 60 : 40, ± 5%. Pour des formulations destinées à l'usage individuel (sel de table) cet agent de coulabilité est avantageusement ajouté dans des proportions allant de 0,8 à 1,2% en poids, typiquement d'environ1%. Pour des formulations destinées à des usages industriels cette proportion peut-être moindre (par exemple cette proportion peut varier de 0,25 à 0,75%)

L'homme du métier sait déterminer sans ambiguïté les composés présents dans une composition de sel qui sont soit des agents antiagglomérants, soit des agents de coulabilité.

Certains de ces additifs sont à utiliser en quantum satis (quantité suffisante et nécessaire), d'autres à un taux de 1 % maximum.

Selon une caractéristique optionnelle de l'invention, la quantité totale d'additif(s) est inférieure à 3%, voire 2%, de préférence 1,5 % en poids total du substitut de sel.

De préférence, chaque additif est utilisé dans des proportions allant de 0,0005 % (trace) à 1% en poids total du substitut de sel.

Le nitrite de sodium est un additif ajouté dans le sel pour la charcuterie ou pour l'alimentation animale. Il a une fonction technique de conservateur, mais il permet également le développement de la couleur et de la flaveur. En dehors de ces deux applications industrielles, le nitrite de sodium n'est pas incorporé dans le sel.

Dans la pratique les taux de nitrite de sodium dans les sels peuvent varier de 0,45 % à 1,8 % selon les besoins clients et les pays.

Selon une autre variante de l'invention, les additifs sont conventionnellement constitués par les composés chimiques spécifiques précités, à l'exclusion d'autres composés.

Aucun de ces additifs n'est obligatoire. Ils sont tous optionnels à la composition.

Par ailleurs, l'utilisation de ces additifs dans une composition de sel ne modifie sensiblement pas le goût.

Selon une caractéristique optionnelle de l'invention, le substitut de sel est essentiellement sous la forme de cristaux comprenant au moins 50 % en poids total du substitut de sel, sous forme de cristaux de granulométrie (mesurée par tamisage) comprise entre 0,1 et 6 mm de diamètre.

De préférence, au moins 50 % en poids total du substitut de sel est sous forme de cristaux de granulométrie comprise entre 0,1 et 3 mm de diamètre.

De préférence, au moins 50 % en poids total du substitut de sel est sous forme de cristaux de granulométrie comprise entre 0,1 et 2 mm de diamètre.

Avantageusement, le substitut de sel comprend au moins 50 % en poids sous forme de cristaux de granulométrie comprise entre 0,1 et 1 mm de diamètre, de préférence allant de 0,2 à 0,5 mm de diamètre.

Selon un aspect particulier préféré de l'invention, les constituants du groupe formé par le chlorure de sodium, le chlorure de potassium, le sulfate de magnésium et le sulfate de calcium, sont d'origine marine.

La présente invention concerne aussi un substitut de sel de table comprenant toutes les caractéristiques précédentes.

Le substitut de sel selon l'invention peut également être constitué d'un mélange comprenant, ou étant constitué par, du chlorure de potassium, du sulfate de magnésium et du sulfate de calcium dans les proportions susmentionnées ci-dessus en tant que « composition restante ». Un tel substitut peut être utilisé pour remplacer une partie du sel ajouté lors de la préparation d'un aliment ou d'une denrée alimentaire. Par exemple il peut remplacer jusqu'à 75% en poids du sel utilisé dans la matrice de ladite denrée alimentaire. De préférence il remplace jusqu'à 50% en poids du sel et notamment jusqu'à 35% en poids du sel présent dans cet aliment ou denrée alimentaire. Avantageusement il remplace environ 25% en poids du sel présent dans cet aliment ou cette denrée alimentaire.

La présente invention concerne également un procédé de fabrication d'un produit salé, notamment d'un produit, ou denrée alimentaire, comprenant l'adjonction audit produit d'un substitut de sel selon l'invention.

Le substitut de sel selon l'invention, qu'il comprenne ou non du chlorure de sodium (sel), peut-être compris ou amalgamé dans des produits alimentaires salés, de tels produits étant eux-mêmes un objet de l'invention.

La présente invention concerne également l'utilisation simultanée, séparée ou étalée dans le temps de chlorure de potassium, de sulfate de magnésium et de sulfate de calcium en association avec du sel (NaCl) pour la préparation de denrées alimentaires. De préférence les proportions respectives de ces trois produits sont telles que décrites dans les « compositions restantes » susmentionnées et/ou les exemples qui suivent.

La présente invention concerne également, l'utilisation d'un substitut de sel selon l'invention, pour la préparation, notamment industrielle, d'aliments pour l'homme et/ou l'animal. Il assure ainsi les mêmes fonctions techniques que le sel, fonctions techniques qui peuvent différer selon les matrices (conservation, texture, couleur, etc.).

A titre d'exemple, on peut citer l'utilisation du substitut de sel selon l'invention pour maintenir le goût d'aliments, principalement pour la fabrication de plats cuisinés, de soupes, de biscuits pour apéritifs etc

La présente invention concerne également, l'utilisation d'un substitut de sel selon l'invention, comme agent de conservation d'aliments tels que par exemple les fromages, la charcuterie et pour la salaison de poissons, de viandes etc.

L'invention sera mieux comprise à la lecture de la description qui va suivre, donnée uniquement à titre d'exemple.

### Exemple 1 : Etude comparative de goût du substitut de sel s Ion l'invention par rapport à des substituts dont les proportions en chlorures sont plus importantes.

On a découvert de manière surprenante, qu'un sel appauvri en chlorure de sodium, et enrichi en sels : KCl, MgSO₄, CaSO₄, avait un goût proche du sel conventionnel et peu de faux goûts malgré sa teneur en sulfates.

### Produits testés :

F0 (sel) : 100% NaCl
F1 (comparatif - 100% chlorures) : 50% NaCl, 46% KCl, 4% MgCL₂
F2 (comparatif- 94.5% chlorures) : 50% NaCl, 44,5% KCl, 5,5% CaSO₄
F3 (composition selon l'invention - 90% chlorures): 50% NaCl, 40% KCl, 7,5% MgSO₄, 2,5% CaSO₄

### Matrices utilisées :

- Jus de tomate VITALIA sans sel ajouté dans lequel ont été incorporés les produits testés à 0,6% en poids.
- Purée de pommes de terre Mousline sans sel ajouté, dans laquelle ont été incorporés les produits testés à 0,6% en poids.

### Nombre de participants : 101

### Echelle de notation appréciation globale :

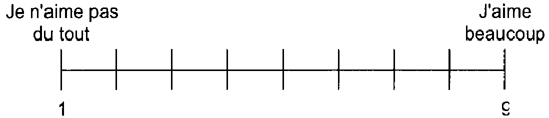

### Echelle de notation de la ressemblance au sel :

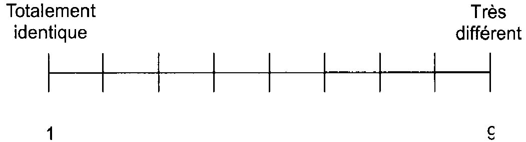

### a) Appréciation globale jus de tomate

| | F0 | F1 | F2 | F3 |
|---|---|---|---|---|
| Moyenne | 5.93 | 4.75 | 4.93 | 5.33 |
| Ecart-type | 2.02 | 2.3 | 2.13 | 2.05 |

La formule selon l'invention F3 obtient la meilleure notation d'appréciation globale dans le jus de tomate derrière la formule au sel conventionnel F0. Elle est mieux notée que les formules F1 et F2 contenant une proportion plus importante de chlorures.

### b) Appréciation globale purée de pommes de terre

| | F0 | F1 | F2 | F3 |
|---|---|---|---|---|
| Moyenne | 6,45 | 5,56 | 5,2 | 5,64 |
| Ecart-type | 1,82 | 1,99 | 1,86 | 2,05 |

La formule selon l'invention F3 obtient la meilleure notation d'appréciation globale dans la purée de pommes de terre derrière la formule au sel conventionnel F0. Elle est mieux notée que les formules F1 et F2 contenant une proportion plus importante de chlorures.

### c) Ressemblance avec témoin sel (dans jus de tomate)

| | F1 | F2 | F3 |
|---|---|---|---|
| Moyenne | 4.63 | 4.05 | 3.98 |
| Ecart-type | 3.19 | 3.25 | 3.07 |

Le jus de tomate assaisonné avec la formule selon l'invention (F3) est celui qui se rapproche le plus du jus de tomate au sel.

Résultats/Conclusions : la formule selon l'invention (F3) au niveau du goût est la meilleure des trois formules testées dans le jus de tomate et dans la purée de pommes de terre. De plus, c'est celle qui se rapproche le plus du goût du sel.

Ainsi, ce premier exemple confirme que le substitut de sel selon l'invention : 50% NaCl, 40% KCI, 7.5% MgSO₄, 2.5% CaSO₄ est meilleur que les formules contenant davantage de chlorures.

### Exemple 2 : Essai triangulaire entre le substitut de sel selon l'invention F5 et une composition commerciale de substitut de sel F4 comprenant chacun 33,3 % de NaCl.

F4 (comparatif) : 33,3 % sel + 66,6 % KCI.
F5 (composition selon l'invention) : 33,3 % sel + 53,3 % KCI + 10 % MgSO₄ + 3,4 % CaSO₄.
Matrice utilisée : jus de tomate VITALIA sans sel ajouté dans lequel ont été incorporés les produits testés à une concentration de 6g/L.

### Méthodologie :

Il a été conduit des essais triangulaires avec ces deux produits (F4, F5) sur 24 participants. Les participants ont testé à chaque fois trois échantillons dont deux identiques et un différent.

Ces essais ont été conduits selon des règles bien établies, utilisant 6 x 4 formulaires suivants : AAB x 4 ; ABB x 4 ; BAA x 4 ; BBA x 4 ; ABA x 4 ; BAB x 4, permettant d'organiser le tirage. (A = F5) (B=F4).

Les participants ont eu à répondre à deux questions :
- Quel est l'échantillon qui vous semble différent ?
- Quel est l'échantillon que vous préférez ?

### Résultats :

Sur 24 participants, 7 ont réussi à trouver l'échantillon qui diffère des deux autres.

En regardant les résultats des 7 "bonnes réponses" on constate que les 7 ont préféré le jus de tomate à la composition F5.

### Conclusion :

Dans ces essais, il est intéressant de noter que les résultats de la préférence des 7 participants qui ont fait la distinction, à juste titre, sont tous identiques et en faveur du substitut de sel selon l'invention.

A cet égard, la préférence de 7 consommateurs sur 7, soit de 100% des consommateurs ayant exprimé une différence est très significative, et par conséquent on peut conclure que le substitut de sel selon l'invention présente un meilleur goût (ou moins de faux-goûts) pour la partie des consommateurs capable de percevoir une différence.

### Exemple 3 : Etude comparative de goût de substituts de sel selon l'invention à différentes teneurs en chlorure de sodium, par rapport au sel, dans une recette de pain.

### Produits testés :

F0 (sel) : 100% NaCl,
F6 (composition selon l'invention) : 85% NaCl, 12% KCI, 2,25% MgSO₄, 0,75% CaSO₄,
F7 (composition selon l'invention): 70% NaCl, 24% KCl, 4,5% MgSO₄, 1,5% CaSO₄.
Matrices utilisées : pain fabriqué à partir du diagramme de fabrication de la méthode BIPEA NF V03-716. Taux de produit salant : 18g/kg de farine.

### Nombre de participants : 61

### a) Appréciation globale de la baguette :

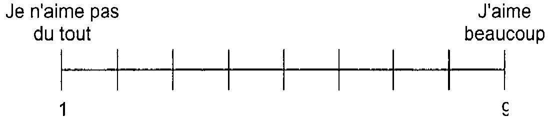

| | Notation d'appréciation globale | | |
|---|---|---|---|
| | F0 | F6 | F7 |
| Moyenne | 6,23 | 6,41 | 6,58 |
| Ecart-type | 1,92 | 2,05 | 1,77 |

### b) Notation de la texture de la baguette :

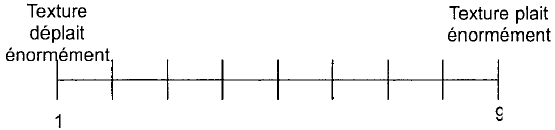

| | Notation texture de la baguette | | |
|---|---|---|---|
| | F0 | F6 | F7 |
| Moyenne | 5,35 | 5,92 | 6,07 |
| Ecart-type | 2,06 | 1,96 | 2,09 |

Conclusion : ces résultats montrent que le pain salé avec les compositions selon l'invention (F6 et F7) est même perçu plus favorablement que le pain au sel conventionnel.

### Exemple 4 : Essais triangulaires entre le substitut de sel selon l'invention et le sel, dans une recette de camembert

### Produits testés :

F0 (sel) : 100% NaCl,
F6 (composition selon l'invention) : 85% NaCl, 12% KCl, 2,25% MgSO₄, 0,75% CaSO₄,
F7 (composition selon l'invention): 70% NaCl, 24% KCl, 4,5% MgSO₄, 1,5% CaSO₄.
Matrices utilisées : camemberts dans lesquels ont été incorporés les produits salants au taux de 2% en poids.

### Nombre de participants : 61

### a) Résultat test de discrimination F0 par rapport à F6 :

Parmi les 61 consommateurs interrogés, seuls 21 ont trouvé la part de camembert différente des deux autres. Parmi ces 21 consommateurs, 20 ont indiqué que ce choix était fait au hasard. Ce résultat montre que la proportion réelle de consommateurs susceptibles de différencier les deux camemberts (estimée à 1,6%) est faible et ne permet pas de conclure à une différence significative des produits salants.

### b) Résultat test de discrimination F0 par rapport à F7 :

Parmi les 61 consommateurs interrogés, seuls 23 ont trouvé la part de camembert différente des deux autres. Parmi ces 23 consommateurs, 19 ont indiqué que ce choix était fait au hasard. Ces résultats montrent que la proportion réelle de consommateurs susceptibles de différencier les deux camemberts (estimée à 6,5%) est faible et ne permet pas de conclure à une différence significative des produits salants.

### Résultats/Conclusions :

Ces essais montrent que les consommateurs, dans le cas du camembert, ne sont pas, dans leur très grande majorité, en mesure de distinguer le substitut de sel selon l'invention du sel conventionnel.

### Exemple 5 : Vérification des fonctions techniques de substituts de sel selon l'invention, dans une recette de pain.

### Produits testés :

F0 (sel) : 100% NaCl,
F6 (composition selon l'invention) : 85% NaCl, 12% KCI, 2,25% MgSO₄, 0,75% CaSO₄,
F7 (composition selon l'invention): 70% NaCl, 24% KCI, 4,5% MgSO₄, 1,5% CaSO₄.
Matrice utilisée : pain fabriqué à partir du diagramme de fabrication de la méthode BIPEA NF V03-716. Taux de produit salant : 18g/kg de farine.

### a) Tests à l'alvéographe de Chopin :

L'alvéographe de Chopin est un outil de mesure habituellement utilisé en boulangerie pour évaluer le comportement du pâton.

| | **F0** | **F6** | **F7** |
|---|---|---|---|
| Force boulangère W | 263 | 255 | 248 |
| Ténacité P | 108 | 105 | 103 |
| Extensibilité L | 65 | 66 | 65 |
| P/L | 1.66 | 1.59 | 1.58 |

Ces résultats montrent qu'il n'y a pas de différence statistiquement significative de comportement de la pâte entre une farine dans laquelle a été incorporé du sel conventionnel et une farine avec les compositions selon l'invention.

### b) Evaluation des principaux paramètres technologiques du produit fini :

| | | **F0** | **F6** | **F7** |
|---|---|---|---|---|
| Longueur des pâtons (en cm) | | 36.4 | 36.4 | 36.5 |
| Volume (en cm 3) | | 1647.5 | 1705.0 | 1682.5 |
| Masse (en g) | | 273.8 | 273.5 | 273.8 |
| Section (en cm) | | 7.85 | 7.80 | 7.60 |
| Moelleux | | Bien (10) | Bien (10) | Bien (10) |
| Coloration croûte | L | 56.99 | 53.58 | 51.97 |
| | a | 10.87 | 11.47 | 11.92 |
| | b | 34.93 | 32.42 | 31.68 |
| Coloration mie | L | 76.89 | 75.19 | 74.9 |
| | a | -3.67 | -3.78 | -3.61 |
| | b | 22.27 | 22.68 | 22.96 |

Ces résultats montrent qu'il n'y a pas de différence entre un pain fabriqué avec du sel conventionnel et un pain fabriqué avec les compositions selon l'invention.

La composition selon l'invention a donc les mêmes propriétés technologiques dans le pain que le sel conventionnel, tant en terme d'élasticité de la pâte qu'en termes de coloration de la croûte ou de la mie.

c) Vérification du rôle de conservation des compostions selon l'invention dans une recette de pain par rapport au sel conventionnel :
L'évaluation de la conservation a été relevée grâce au suivi des pertes de masse à J+1, J+2 et J+3.

| | **Moyennes des masses** | | |
|---|---|---|---|
| | **F0** | **F6** | **F7** |
| J | 273.5 | 273.5 | 273.75 |
| J+1 | 255.25 | 255.5 | 256.25 |
| J+2 | 237 | 238 | 238.75 |
| J+3 | 220.75 | 222.25 | 222.5 |

La comparaison des pertes de masses entre le pain au sel conventionnel (F0) et les deux pains avec un substitut de sel selon l'invention (F6 et F7) nous montre que le substitut de sel a les mêmes propriétés conservatrices dans le pain que le sel.

Conclusions : ces essais dans une recette de pain montrent que le substitut de sel selon l'invention a les mêmes propriétés technologiques que le sel conventionnel.

### Exemple 6 : Vérification des rôles technologiques de substituts de sel selon l'invention dans une recette de camembert.

### Produits testés :

F0 (sel) : 100% NaCl,
F6 (composition selon l'invention) : 85% NaCl, 12% KCI, 2,25% MgSO₄, 0,75% CaSO₄,
F7 (composition selon l'invention): 70% NaCl, 24% KCl, 4,5% MgSO₄, 1,5% CaSO₄.
Matrice utilisée : camemberts dans lesquels ont été incorporés les produits salants au taux de 2%.

### Résultats :

| | **Unité** | **F0** | **F6** | **F7** |
|---|---|---|---|---|
| **EST** | g/100g | 46,92 | 48,43 | 48,48 |
| **MG** | g/100g | 21,50 | 22,50 | 22,63 |
| **G/S** | % | 45,82 | 46,46 | 46,67 |
| **HFD** | % | 67,62 | 66,55 | 66,58 |
| **Ca** | mg/100g | 569 | 554 | 569 |
| **Ca/ESD** | % | 2,24 | 2,14 | 2,20 |
| **MAT** | g/100g | 20,9 | 21,8 | 21,6 |
| NS/NT | % | 35,0 | 33,1 | 33,3 |
| **NPN/NT** | % | 18,3 | 17,2 | 16,7 |
| **NH₃** | mg/100g | 153,5 | 153,0 | 151 |
| **Lactate L** | mg/100g | 29 | 41 | 41 |
| **Lactate** D | mg/100g | 5 | 4 | 6 |
| **Lactate** | mg/100g | 34 | 44 | 47 |
| **Chlorures** | g/100g | 1,30 | 1,28 | 1,31 |
| **Chlorures croûte** | g/100g | 1,23 | 1,27 | 1,22 |
| **NaCl via Cl** | g/100g | 2,11 | | |
| **NaCl via Na** | g/100g | 2,09 | 1,84 | 1,56 |
| **Na** | g/100g | 0,82 | 0,73 | 0,62 |
| **Mg** | g/kg | 0,24 | 0,26 | 0,34 |
| K | g/kg | 1,23 | 2,57 | 4,15 |

### Légende :

**EST : Extrait sec total**
**G/S : Gras sur sec**
**HFD** : **Humidité du fromage dégraissé**
**ESD** : **Extrait sec dégraissé**
**NS** : **Azote soluble**
**NT : Azote totale**
**NPN** : **Azote non protéique**
**MG : Matière Grasse**
**MAT : Matières azotées totales**

Le type de sel modifie peu le développement de la flore de surface pendant l'affinage. La flore apparait au même stade d'affinage et évolue de manière globalement similaire pour les trois types de sel.

L'activité de l'eau (a_{w}) n'est pas statistiquement différente dans les camemberts fabriqués avec les différents types de sel. Ce résultat laisse supposer un comportement similaire vis-à-vis des germes pathogènes d'altération.

Enfin, la protéolyse des camemberts n'est pas sigrificativement influencée par le substitut de sel, aussi bien en termes de protéolyse primaire que de protéolyse fine (production d'ammoniac notamment).

Conclusion : Ces résultats nous ont permis de vérifier que les compositions selon l'invention avaient bien la même fonction technique que le sel dans le camembert.

### Exemple 7 : Vérification des fonctions techniques de substituts de sel selon l'invention dans une recette de saucisse de Francfort.

Des tests comparatifs d'utilisation de substituts de sels selon l'invention dans des recettes de saucisses ont été réalisés.

Les saucisses comportent une teneur en lipides constante de 25% et sont réalisées en utilisant 4 séries de produits salants :
- T = témoin 100% de chlorure de sodium.
- R35 = essai à 35% de réduction du chlorure de sodium.
- S25 = essai à 25% de substitution du chlorure de sodium par un mélange de 80% de chlorure de potassium, de 15% de sulfate de magnésium et de 5 % sulfate de calcium.
- S35 = essai avec 35% de substitution du chlorure de sodium par le mélange de 80% de chlorure de potassium, de 15% de sulfate de magnésium et de 5 % sulfate de calcium.

Trois répétitions de quinze saucisses chacune sont réalisées pour chaque série, chaque répétition comportant les 4 séries T, R35, S25 et S35, fabriquées avec la même base de matières premières. La formulation de ses produits est représenté dans le tableau 1 suivant:

**Tableau 1 : formulations des 4 séries de saucisses à pâte fine :**

| **Teneur en %** | **T** | **R35** | **S25** | **S35** |
|---|---|---|---|---|
| Epaule | 52,96 | 53,30 | 52,96 | 52,96 |
| Bardière | 24,98 | 25,14 | 24,98 | 24,98 |
| Glace | 19,99 | 20,11 | 19,99 | 19,99 |
| Sel nitrité | 1,17 | 1,17 | 1,17 | 1,17 |
| Dextrose | 0,22 | 0,22 | 0,22 | 0,22 |
| Erythorbate | 0,04 | 0,04 | 0,04 | 0,04 |
| CS ordinaire | 0,63 | 0,00 | 0,18 | 0,00 |
| Mélange constitué (en poids) de 80% KCl, 15% MgSO4 et 5% CaSO4 | 0,00 | 0,00 | 0,45 | 0,63 |
| TOTAL | 100 | 100 | 100 | 100 |

CS : Concentration de Sel : Il s'agit de NaCl « ordinaire » c'est-à-dire sans ajout de nitrite. Les réductions de sels prennent en compte la quantité totale de sel (ordinaire et nitrité).

Le rendement technologique (variation de poids), la texture (fermeté de la pâte), la couleur et l'appréciation sensorielle globale ont été testés. Aucune différence significative entre le témoin et les saucisses S25 et S35 n'a été déterminée alors que les saucisses R35 sont nettement inférieures en termes de rendement technologiques, de texture et d'appréciation sensorielle.

### Exempl 8 : Formulation d'un substitut d s l pour salière

Un exemple de substitut de sel particulièrement adaptée à une distribution par salière est une composition sous forme de cristaux dont la taille, ou granularité, mesurée par tamisage, est généralement comprise dans la gamme allant de 200 à 500 µm et dont la composition est la suivante en poids total du substitut de sel :
- 50% NaCl,
- 41 % KCl,
- 5,5% MgSO₄,
- 2,5% CaSO₄,
- 1 % DC4 (un mélange de carbonate et d'oxyde de magnésium de proportions respectives en poids 60:40) ; et
- du ferrocyanure sous forme de trace (0,0005%).

Cette formulation présente une bonne coulabilité et est particulièrement adaptée à une distribution du substitut de sel dans une salière, c'est-à-dire un récipient dont le couvercle est percé d'une série de trous permettant l'écoulement contrôlé d'une petite quantité de substitut, généralement sur des aliments. Cette formulation présente notamment l'avantage de préserver, au moins en partie la coulabilité des cristaux durant leurs stockage . Un tel produit est particulièrement adapté à une utilisation en tant que substitut de sel de table.

### Exemple 9 : Formulation de substitut de sel sous forme de particules et présentant une faible agglomération

Un autre exemple de substitut de sel permettant un stockage et un transport aisé est une composition sous forme de cristaux dont la taille, ou granularité, mesurée par tamisage, est généralement comprise de 100 à 900 µm et dont la composition est la suivante en poids total du substitut de sel :
- 50% NaCl,
- 40% KCl,
- 7% MgSO₄,
- 2,5% CaSO₄,
- 0,5% DC4 ; et
- du ferrocyanure sous forme de trace (0,0005%).

Cette formulation présente notamment une agglomération des particules durant le stockage très réduite et donc une bonne coulabilité. Un tel produit est donc particulièrement bien adapté à une utilisation, automatisée ou non, dans l'industrie alimentaire.

## Revendications

1. Substitut de sel comprenant entre 25 % et 96 % de chlorure de sodium en poids total du substitut de sel hors additifs, de 0 à 4 % d'additif(s) en poids total du substitut de sel, et une composition restante comprenant en poids total de cette composition restante :
- 72 % à 87 % de chlorure de potassium,
- 10 % à 20 % de sulfate de magnésium, et
- 3 % à 8 % de sulfate de calcium.

2. Substitut de sel selon la revendication 1, comprenant entre 50 et 95 % de chlorure de sodium, en poids total du substitut de sel hors additifs.

3. Substitut de sel selon la revendication 1 ou 2, dans lequel la composition restante comprend en poids total de cette composition restante :
- 76 % à 84 % de chlorure de potassium,
- 12 % à 18 % de sulfate de magnésium, et
- 4 % à 6 % de sulfate de calcium.

4. Substitut de sel selon l'une quelconque des revendications 1 à 2, dans lequel la composition restante comprend en poids total de cette composition restante :
- 82 % à 86 % de chlorure de potassium,
- 10 % à 12,5 % de sulfate de magnésium, et
- 4,5 % à 5,5 % de sulfate de calcium.

5. Substitut de sel selon l'une quelconque des revendications 1 à 4, dans lequel chaque additif appartient au groupe constitué par les composés de l'iode, les agents antiagglomérants, les agents de coulabilité, le fluorure de potassium et les nitrites, et leurs mélanges.

6. Substitut de sel selon l'une quelconque des revendications 1 à 5, dans lequel la quantité d'additif(s) est inférieure à 2 % en poids total du substitut de sel.

7. Substitut de sel selon l'une quelconque des revendications 1 à 6, dans lequel tous les constituants du groupe formé par le chlorure de sodium, le chlorure de potassium, le sulfate de magnésium et le sulfate de calcium, sont d'origine marine.

8. Substitut de sel comprenant la composition suivante:
- 72 % à 87 % en poids de chlorure de potassium,
- 10 % à 20 % en poids de sulfate de magnésium, et
- 3 % à 8 % en poids de sulfate de calcium.

9. Substitut de sel selon la revendication 8, dans lequel la composition comprend de :
- 78 % à 82 % en poids de chlorure de potassium,
- 13,5 % à 16,5 % en poids de sulfate de magnésium, et
- 4,5 % à 5,5 % en poids de sulfate de calcium.

10. Substitut de sel selon l'une quelconque des revendications 1 à 9, sous la forme de cristaux ayant une granulométrie comprise entre 0,1 et 6 mm de diamètre, de préférence allant de 0,2 à 0,5mm.

11. Substitut de sel de table **caractérisé en ce qu'**il comprend un substitut de sel selon l'une quelconque des revendications précédentes.

12. Utilisation du substitut de sel selon l'une quelconque des revendications 1 à 11, pour la préparation industrielle d'aliments pour l'homme et/ou l'animal.

13. Procédé de fabrication d'un produit salé, notamment d'un produit alimentaire, comprenant l'adjonction audit produit d'un substitut de sel selon l'une quelconque des revendications 1 à 11.

14. Utilisation simultanée, séparée ou étalée dans le temps, de chlorure de potassium, de sulfate de magnésium et de sulfate de calcium dans des proportions respectives décrites à l'une quelconque des revendications 8 à 11, en association avec du chlorure de sodium pour la préparation de denrées alimentaires.

15. Produit alimentaire salé comprenant un substitut de sel tel que décrit dans les revendications 1 à 11.
